# EUROPÄISCHE PATENTSCHRIFT

(11) **EP 1 392 599 B1**
(45) Veröffentlichungstag und Bekanntmachung des Hinweises auf die Patenterteilung: **11.10.2006**
(21) Anmeldenummer: 02762281.0
(22) Anmeldetag: 05.06.2002
(51) Int. Cl.: C01B 11/02, C02F 1/76

(54) **VERFAHREN ZUR HERSTELLUNG EINER IM WESENTLICHEN CHLORITFREIEN, STABILEN WÄSSRIGEN CHLORSAUERSTOFFLÖSUNG, DIE MIT DEM VERFAHREN ERHÄLTLICHE CHLORSAUERSTOFFLÖSUNG SOWIE DEREN VERWENDUNG**
METHOD FOR PRODUCING AN ESSENTIALLY CHLORITE-FREE, STABLE, AQUEOUS CHLORINE-OXYGEN SOLUTION, THE CHLORINE-OXYGEN SOLUTION OBTAINED BY MEANS OF SAID METHOD, AND THE USE OF THE SAME
PROCEDE POUR LA PRODUCTION D'UNE SOLUTION OXYGENE-CHLORE AQUEUSE STABLE, PRATIQUEMENT SANS CHLORITE, SOLUTION OXYGENE-CHLORE OBTENUE SELON CE PROCEDE ET SON UTILISATION

(30) Priorität: 07.06.2001 DE 10127729
(43) Veröffentlichungstag der Anmeldung: 03.03.2004
(73) Patentinhaber: P & W Invest Vermögensverwaltungsgesellschaft MbH, 5020 Salzburg (AT)
(72) Erfinder: POLAK, Walter, A-5020 Salzburg (AT)
(74) Vertreter: Hagemann, Heinrich
(86) Internationale Anmeldenummer: PCT/EP2002/006178
(87) Internationale Veröffentlichungsnummer: WO 2002/098791

(56) Entgegenhaltungen:
- EP-A- 0 347 320
- US-A- 5 009 875
- US-A- 6 051 135
- "HERSTELLUNG VON REINEM CHLORDIOXID IM LABORATORIUM" UMWELT UND DEGUSSA. PRODUKTE, VERFAHREN, METHODEN, XX, XX, 10. Juli 1999 (1999-07-10), Seite COMPLETE XP000847684
- GORDON G: "Is all chlorine dioxide created equal?" J AM WATER WORKS ASSOC;JOURNAL / AMERICAN WATER WORKS ASSOCIATION APRIL 2001, Bd. 93, Nr. 4, April 2001 (2001-04), Seiten 163-174, XP008009991

## Beschreibung

Die vorliegende Erfindung betrifft ein Verfahren zur Herstellung einer im wesentlichen chloritfreien, stabilen wäßrigen Chlorsauerstofflösung, die nach dem Verfahren erhältliche Chlorsauerstofflösung sowie deren Verwendung.

Insbesondere im Bereich der Wasseraufbereitung, wie in Schwimmbädern, müssen die entsprechenden Normen, Richtlinien und Vorschriften strikt eingehalten werden. Hierbei müssen die Rahmenbedingungen möglichst einfach, energiesparend und umweltschonend gewährleistet werden, so daß stets ein Bedarf nach entsprechend modifizierten Sauerstoffträgern in Form von Chlor-Systemen besteht, welche für den genannten Zweck geeignet sind, aber kein freies Chlor erzeugen. Freies Chlor hat zahlreiche Nachteile, da es sehr aggressiv ist und daher Nebenreaktionen eingeht, die zu Chlorstickstoffverbindungen, halogenierten Chlorwasserstoffen und dergleichen führen. Neben den toxikologischen Aspekten der gebildeten Nebenprodukte spielt es auch eine Rolle, daß durch die Nebenreaktionen Chlor verlorengeht, was dann zur gewünschten Entkeimung bzw. Desinfektion nicht mehr zur Verfügung steht.

So sollen die oxidativen Eigenschaften der Verbindungen den erfolgreichen Einsatz im Schwimmbadbereich zum Beispiel als Aufbereitungsmittel ermöglichen. Derartige Produkte sind halogenhaltige Sauerstoffkomplexe, wobei zum Teil komplizierte Charge-Transfer-Strukturen ausgebildet werden, die bislang nicht bis ins Detail analysiert wurden, da die Isolierung dieser Komplexe äußerst schwierig ist. Ein derartiger bekannter Anionenkomplex ist das "Tetrachlorodecaoxid", das stabilisierten aktiven Sauerstoff in einer Chloritionen-Matrix zusammen mit Chlordioxid enthält.

Für derartige Systeme gibt es im Stand der Technik bereits einige Vorschläge. Die EP 0 200 155 B1, EP 0 200 156 B 1 und EP 0 200 157 B1 beziehen sich auf chemisch stabilisierte wäßrige Chloritmatrix-Lösungen zur intravenösen und perioperativen Verabreichung in bestimmten Konzentrationen bzw. auf die Verwendung der wäßrigen Lösung zur Herstellung von Arzneimitteln zur intravenösen Applikation bei infektiösen Zuständen, hervorgerufen durch Parasiten, Pilze, Bakterien oder Mykoplasmen, bzw. zur Tumorbehandlung. Hierbei steht ausschließlich das Arzneimittel sowie die verschiedenen Behandlungsverfahren im Vordergrund.

Nach der Lehre der DE 34 38 966 A1 wird eine Zubereitung beschrieben, welche aus einer Kombination aus stabilisierten Chloritmatrices, insbesondere Tetrachlorodecaoxid (TCDO), und bevorzugt äquimolaren Mengen einer Eisenporphyrinverbindung aufgebaut ist, wobei die beiden Bestandteile erst kurz vor Gebrauch zusammengegeben werden. Die Zubereitung findet als bakterizides Mittel zur Desinfektion, Wundbehandlung zur topischen oder intravenösen Verabreichung, zur Konservierung oder Oberflächensterilisation Anwendung.

In den Lehren der DE 34 03 631 C2 und EP 0 136 309 B1 wird ein Verfahren zur Herstellung einer Chloritlösung beansprucht, wobei eine sulfationenhaltige wäßrige Lösung eines pH-Werts ≤ 3 mit einer geringen Konzentration einer Peroxyverbindung versetzt wird, die im Endprodukt eine Konzentration von etwa 0,001 bis 0,01 molar aufweist, wonach eine alkalische wäßrige Chloritlösung in einer derartigen Menge zugegeben wird, daß sich ein pH-Wert über 7,0, insbesondere zwischen 7,5 und 8,0, einstellt. Diese wäßrigen Chloritlösungen finden als Biozide zur Behandlung von Hautkrankheiten und -reizungen sowie zur Wasseraufbereitung Verwendung.

Darüber hinaus ist es aus der US-A-2 358 866 von 1944 bekannt, eine sauer eingestellte stabile Chloritlösung, deren Stabilisierung durch Einverleiben beispielsweise stöchiometrischer Mengen von Wasserstoffperoxid bei pH-Werten von 2 bis 7 bei Temperaturen um 80°C erzielt wird. Durch die Zugabe von Wasserstoffperoxid wird die Bildung von Chlordioxid unterdrückt, das korrosiv wirkt und zahlreiche Nachteile aufweist. Besonders günstige Ergebnisse werden im pH-Bereich von 5 bis 7 erhalten.

Die Lehre der US 4 296 103 bezieht sich auf mit Perborat stabilisierte Lösungen von Chloroxiden, die 4 bis 15 Gew.-Teile Natrium- oder Kaliumperborat pro Liter Wasser enthalten, die unter Zugabe eines Peroxids oder Percarbonats für therapeutische Zwecke zur oralen Verabreichung zum Einsatz kommen. Die Lösungen sind zusammengesetzt aus Natrium- oder Kaliumchlorit, Natriumhypochlorit, Salzsäure, Schwefelsäure, Natrium- oder Kaliumperborat sowie Natriumperoxid. Insbesondere ist hier der Einsatz von Perboraten wesentlich.

Die Literaturstelle *"Herstellung von reinem Chlordioxid im Laboratorium",* Umwelt und Degussa, Produkte, Verfahren, Methoden, Seite COMPLETE, XP-000847684 (10. Juli 1999) (1999-07-10) gibt Hinweise zum Reaktionsablauf bei der Herstellung eines reinen Chlordioxids. So werden eingesetzt Natriumchlorit und Natriumperoxodisulfat. Hierbei wird das Natriumperoxodisulfat gegenüber der stöchiometrisch erforderlichen Menge bei der Umsetzung mit Natriumchlorit in einem Überschuß eingesetzt. Die hergestellte Chlordioxid-Lösung, die auch nach einer Standzeit von 77 Tagen kein Chlorit enthält, ist wegen ihrer Lichtempfindlichkeit in braunen Glasflaschen aufzubewahren. Bei Raumtemperatur, besser aber noch im Kühlschrank bei etwa 4°C, sind diese bekannten Chlordioxid-Lösungen über mehrere Wochen beständig, ohne daß es hierbei zu signifikanten Veränderungen in der Zusammensetzung dieser Lösung kommt. Es sind demzufolge Vorkehrungen zu treffen, um die wünschenswerte Stabilität einzuhalten.

Der Erfindung liegt demnach die Aufgabe zugrunde, eine stabile Chlorsauerstofflösung bereitzustellen, welche die Anforderungen für eine Wasseraufbereitung, insbesondere in Schwimmbädern erfüllt, d.h. toxikologisch unbedenklich, umweltfreundlich, wirtschaftlich einsetzbar und aus anwendungstechnischer Sicht in hohem Maße geeignet ist.

Erfindungsgemäß wird obige Aufgabe gelöst durch ein Verfahren zur Herstellung einer im wesentlichen chloritfreien, stabilen wäßrigen Chlorsauerstofflösung mit den Schritten:
(1)Lösen einer Hydrogensulfatverbindung in Wasser; (2) Zugeben einer Säure zu der wäßrigen hydrogensulfathaltigen Lösung in einer solchen Menge, daß der pH-Wert im angestrebten Endprodukt in Form der im wesentlichen chloritfreien, stabilen wäßrigen Chlorsauerstofflösung zwischen 3 und 5 gehalten wird; (3) Zugeben einer Peroxidverbindung; (4) Zutropfen einer wäßrigen Chloritlösung in einer Menge von etwa 60 bis 90, insbesondere 70 bis 80, Mol% Chlorit, bezogen auf die Konzentration an Peroxidverbindung.

Die in Schritt (1) einzusetzende Hydrogensulfatverbindung wird zunächst in Wasser gelöst. Bevorzugt werden Alkali- oder Erdalkalihydrogensulfat eingesetzt. In einer vorteilhaften Ausfüllrungsform wird die Hydrogensulfatverbindung in einer Menge von etwa 5 bis 20, insbesondere 5 bis 10, Mol%, bezogen auf die Konzentration an Peroxid, eingesetzt. Durch Ansäuern der wäßrigen Lösung mit einer Mineralsäure in Schritt (2) wird der pH-Wert entsprechend eingestellt. Nach einer bevorzugten Ausführungsform wird verdünnte Schwefelsäure, insbesondere eine 1,0 bis 10 N H₂SO₄ verwendet.

Dieser sauren wäßrigen Lösung wird in Schritt (3) eine Peroxidverbindung in fester Form oder als wäßrige Lösung zugesetzt. Vorzugsweise wird als Peroxidverbindung Wasserstoffperoxid oder ein Peroxid eines Alkali- oder Eralkalimetalls eingesetzt, wobei dem Fachmann im Rahmen der Erfindung auch weitere geeignete Peroxide geläufig sind. Selbstverständlich können auch Mischungen von Peroxiden zum Einsatz kommen. Die im erfindungsgemäßen Verfahren eingesetzten Peroxidverbindungen dienen in erster Linie dazu, das erhaltene System zu stabilisieren.

Vorteilhaft wird in Schritt (4) als Chlorit Natriumchlorit eingesetzt. Nach einer besonders zweckmäßigen Ausgestaltung des erfindungsgemäßen Verfahrens wird Schritt (4) innerhalb von 1/4 bis 1/2 h durchgeführt, d.h. das Zutropfen der wäßrigen Chloritlösung wird innerhalb der vorgegebenen Zeitspanne abgeschlossen. Dies hat den Zweck, die Reaktion kontrolliert langsam ablaufen zu lassen.

Während des Herstellungsverfahrens ändert sich die Farbe der Lösung von braun nach gelbgrün. Es wird angenommen, daß die sich einstellende Braunfärbung auf die Bildung des Charge-Transfer-Kompexes Cl₄O₁₀²⁻ zurückzuführen ist, wonach eine gelbgrüne Färbung gebildet wird, die erhalten bleibt. Demnach liegt ein aktiven Sauerstoff enthaltender Komplex vor, wobei die für Tetrachlorodecaoxid charakteristische helle gelbgrüne Färbung der Lösung der gelbgrünen Farbe der erfindungsgemäßen Chlorsauerstofflösung farblich ähnelt.

Die erfindungsgemäß hergestellte Chlorsauerstofflösung kann über Monate gelagert werden, ohne ihre oxidative Wirkung zu verlieren, und zeigt insbesondere folgende Vorteile: Sie ist einfach zu dosieren und zu handhaben, toxikologisch völlig unbedenklich, umweltfreundlich, wirtschaftlich einsetzbar, da die Herstellung kostengünstig auch in großem Maßstab möglich ist und aus anwendungstechnischer Sicht in hohem Maße zur Wasseraufbereitung geeignet. Weitere Vorteile sind beispielsweise der Einsatz zur Flächendesinfektion, die Verwendung als Grundstoff für Arzneimittel zur Behandlung der Haut, aber auch aller anderer Applikationen.

Gegenstand der Erfindung sind auch nach dem obigen Verfahren erhältliche, im wesentlichen chloritfreie, stabile wäßrige Chlorsauerstofflösungen, wobei die für Tetrachlorodecaoxid charakteristische helle gelbgrüne Färbung der Lösung der gelbgrünen Farbe der erfingungsgemäßen Chlorsauerstofflösung farblich ähnelt.

Mit besonderem Vorteil läßt sich die erfindungsgemäße Chlorsauerstofflösung zur Wasseraufbereitung, insbesondere zur Aufbereitung von Trinkwasser, Betriebswasser oder Desinfektion bzw. Entkeimung von Schwimmbad- und Badewasser einsetzen. Durch entsprechendes Verdünnen der hergestellten Lösungen ist es ohne weiteres möglich, die gewünschte Dosierung bereitzustellen.

Erfindungsgemäß kommt die Chlorsauerstofflösung in einer solchen Menge zum Einsatz, daß 0,1 bis 0,3, insbesondere 0,1 bis 0,15, Mol Chlorit als Ausgangssubstanz auf ein Liter aufzubereitendes Wasser eingesetzt werden.

Nachfolgend wird die Erfindung anhand eines Beispiels, welche die erfindungsgemäße Lehre nicht beschränken soll, im einzelnen beschrieben. Dem Fachmann sind im Rahmen der erfindungsgemäßen Offenbarung weitere Ausfuhrungsbeispiele offensichtlich.

### Beispiel

In 18 ml Wasser werden 0,2 g Natriumhydrogensulfat gelöst, dann 1,2 ml 10 N Schwefelsäure zugefügt und weiter 3,8 ml 30 %ige Wasserstoffperoxidlösung vorsichtig eingerührt. Zu dieser Lösung werden innerhalb von 15 Minuten 15,7 ml Natriumchloritlösung (25%ig) zugetropft. Die Lösung färbt sich über braun nach gelbgrün und bleibt dann stabil.

## Patentansprüche

1. Verfahren zur Herstellung einer im wesentlichen chloritfreien, stabilen wäßrigen Chlorsauerstofflösung, **gekennzeichnet durch** die folgenden Schritte:
(1) Lösen einer Hydrogensulfatverbindung in Wasser,
(2) Zugeben einer Säure zu der wäßrigen hydrogensulfathaltigen Lösung in einer solchen Menge, daß der pH-Wert im angestrebten Endprodukt in Form der im wesentlichen chloritfreien, stabilen wäßrigen Chlorsauerstofflösung zwischen 3 und 5 gehalten wird,
(3) Zugeben einer Peroxidverbindung und
(4) Zutropfen einer wäßrigen Chloritlösung in einer Menge von 60 bis 90 Mol% Chlorit, bezogen auf die Konzentration an Peroxidverbindung.

2. Verfahren nach Anspruch 1, **dadurch gekennzeichnet, daß** als Hydrogensulfatverbindung in Schritt (1) ein Alkali- oder Erdalkalihydrogensulfat eingesetzt wird.

3. Verfahren nach Anspruch 1 oder 2, **dadurch gekennzeichnet, daß** die Hydrogensulfatverbindung in Schritt (1) in einer Menge von 5 bis 20 Mol%, bezogen auf die Konzentration an Peroxid, eingesetzt wird.

4. Verfahren nach mindestens einem der vorhergehenden Ansprüche, **dadurch gekennzeichnet, daß** in Schritt (2) als Säure verdünnte Schwefelsäure, insbesondere eine 1,0 bis 10 N Schwefelsäure, eingesetzt wird.

5. Verfahren nach mindestens einem der vorhergehenden Ansprüche, **dadurch gekennzeichnet, daß** die Peroxidverbindung in Schritt (3) aus der aus Wasserstoffperoxid oder einem Peroxid eines Alkali- oder Erdalkalimetalls bestehenden Gruppe ausgewählt wird.

6. Verfahren nach mindestens einem der vorhergehenden Ansprüche, **dadurch gekennzeichnet, daß** in Schritt (4) als Chlorit Natriumchlorit eingesetzt wird.

7. Verfahren nach mindestens einem der vorhergehenden Ansprüche, **dadurch gekennzeichnet, daß** Schritt (4) innerhalb von 1/4 bis 1/2 h durchgeführt wird.

8. Stabile wäßrige Chlorsauerstofflösung, die im wesentlichen chloritfrei ist, erhältlich nach dem Verfahren nach mindestens einem der vorhergehenden Ansprüche und mit einem Gehalt an einem aktiven Sauerstoff enthaltenden Komplex, wobei die für Tetrachlorodecaoxid charakteristische helle gelbgrüne Färbung der Lösung der gelbgrünen Farbe der Chlorsauerstofflösung farblich ähnelt."

9. Verwendung der wäßrigen Chlorsauerstofflösung nach Anspruch 8 zur Wasseraufbereitung insbesondere von Trinkwasser, oder zur Desinfektion von Schwimmbad- und Badewasser.

10. Verwendung der Chlorsauerstofflösung nach Anspruch 9 in einer solchen Menge, daß 0,1 bis 0,3 Mol Chlorit als Ausgangssubstanz auf ein Liter aufzubereitendes Wasser eingesetzt werden.

## Claims

1. A process for the production of an essentially chlorite-free, stable, aqueous chlorine-oxygen solution **characterized by** the following steps:
(1) dissolving a hydrogensulphate compound in water,
(2) adding an acid to the aqueous hydrogensulphate-containing solution in an amount such that the pH in the desired end product in the form of the essentially chlorite-free, stable, aqueous chlorine-oxygen solution is kept at from 3 to 5,
(3) adding a peroxide compound and
(4) adding dropwise an aqueous chlorite solution in an amount of 60 to 90 mol% chlorite, based on the concentration of peroxide compound.

2. A process according to claim 1, **characterized in that** an alkali metal hydrogensulphate or alkaline earth metal hydrogensulphate is used as hydrogensulphate compound in step (1).

3. A process according to either of claim 1 or claim 2, **characterized in that** the hydrogensulphate compound in step (1) is used in an amount of from 5 to 20 mol%, based on the concentration of peroxide.

4. A process according to at least one of the preceding claims, **characterized in that** dilute sulphuric acid, in particular a 1.0 to 10 N sulphuric acid is used as acid in step (2).

5. A process according to at least one of the preceding claims, **characterized in that** the peroxide compound in step (3) is selected from the group consisting of hydrogen peroxide or a peroxide of an alkali metal or an alkaline earth metal.

6. A process according to at least one of the preceding claims, **characterized in that** sodium chlorite is used as chlorite in step (4).

7. A process according to at least one of the preceding claims, **characterized in that** step (4) is carried out in the course of ¼ to ½ hr.

8. A stable aqueous chlorine-oxygen solution which is essentially chlorite-free obtainable by the method according to at least one of the preceding claims and having a content of an active oxygen-containing complex, the light yellowish-green colouring of the solution which is characteristic of tetrachlorodecaoxide resembling in colour the yellowish-green colour of the chlorine-oxygen solution.

9. Use of the aqueous chlorine-oxygen solution according to claim 8 for the treatment of water, especially drinking water or for the disinfection of swimming pool and bathing water.

10. Use of the chlorine-oxygen solution according to claim 9 in an amount such that from 0.1 to 0.3 mol of chlorite is used as starting substance per litre of water to be treated.

## Revendications

1. Procédé de production d'une solution aqueuse stable d'oxygène-chlore essentiellement exempte de chlorite, **caractérisé par** les étapes suivantes :
(1) dissolution d'un hydrogénosulfate dans l'eau,
(2) addition d'un acide à la solution aqueuse d'hydrogénosulfate en une quantité telle que le produit que l'on veut obtenir sous forme de solution aqueuse stable d'oxygène-chlore essentiellement exempte de chlorite ait un pH dont la valeur se maintienne entre 3 et 5,
(3) addition d'un peroxyde, et
(4) addition goutte-à-goutte d'une solution aqueuse de chlorite en une proportion de 60 à 90 % en moles de chlorite par rapport à la concentration en peroxyde.

2. Procédé suivant la revendication 1, **caractérisé en ce que** l'hydrogénosulfate utilisé dans l'étape (1) est un hydrogénosulfate de métal alcalin ou de métal alcalino-terreux.

3. Procédé suivant la revendication 1 ou 2, **caractérisé en ce que** l'hydrogénosulfate est utilisé dans l'étape (1) en une proportion de 5 à 20 mol % par rapport à la concentration en peroxyde.

4. Procédé suivant au moins l'une des revendications précédentes, **caractérisé en ce que** l'acide utilisé dans l'étape (2) est de l'acide sulfurique dilué, en particulier un acide sulfurique 1,0 à 10N.

5. Procédé suivant au moins l'une des revendications précédentes, **caractérisé en ce que** le peroxyde utilisé dans l'étape (3) est choisi dans le groupe constitué du peroxyde d'hydrogène ou d'un peroxyde d'un métal alcalin ou d'un métal alcalino-terreux.

6. Procédé suivant au moins l'une des revendications précédentes, **caractérisé en ce que** le chlorite utilisé dans l'étape (4) est le chlorite de sodium.

7. Procédé suivant au moins l'une des revendications précédentes, **caractérisé en ce que** l'étape (4) est conduite en une période d'un quart d'heure à une demi-heure.

8. Solution aqueuse stable d'oxygène-chlore, qui est essentiellement exempte de chlorite, obtenue par le procédé selon au moins l'une des revendications précédentes et ayant un teneur en un complexe contenant de l'oxygène actif, la coloration vert-jaune clair caractéristique du tétrachlorodécaoxyde étant semblable, quant à la teinte, à la couleur vert-jaune de la solution d'oxygène-chlore.

9. Utilisation de la solution aqueuse d'oxygène-chlore suivant la revendication 8 pour le traitement de l'eau, en particulier d'eau potable, ou pour la désinfection d'eau de piscine ou de bain.

10. Utilisation de la solution d'oxygène-chlore suivant la revendication 9 en une quantité apportant 0,1 à 0,3 mole de chlorite, comme substance de départ, par litre d'eau à traiter.
